# EUROPÄISCHE PATENTANMELDUNG

(11) **EP 4 844 652 A1**
(43) Veröffentlichungstag der Anmeldung: **25.11.2026**
(21) Anmeldenummer: 26169714.8
(22) Anmeldetag: 31.03.2026
(51) Int. Cl.: G06Q 10/087

(54) **VORRICHTUNG UND VERFAHREN ZUR MATERIALVERBRAUCHSERFASSUNG AN EINEM FERTIGUNGSARBEITSPLATZ**

(30) Priorität: 22.05.2025 DE 102025119963
(71) Anmelder: SICK AG, 79183 Waldkirch (DE)
(72) Erfinder: Schonhardt, Stefan, 79256 Buchenbach (DE)
(74) Vertreter: Manitz Finsterwald Patent- und Rechtsanwaltspartnerschaft mbB

(57) **Zusammenfassung**

In einer Ausführungsform umfasst eine Vorrichtung zur Materialverbrauchserfassung an einem Fertigungsarbeitsplatz eine Kamera, die dazu eingerichtet ist, einen Vorrat eines an dem Fertigungsarbeitsplatz verwendeten Materials zu erfassen und eine entsprechende Folge von Einzelbildern zu erzeugen, und eine mit der Kamera gekoppelte Auswerteeinheit, die dazu eingerichtet ist, die Folge von Einzelbildern auszuwerten, daraus eine vorhandene Menge des Materials zu ermitteln und mit einem Ausgabesignal bereitzustellen.

## Beschreibung

Die Erfindung betrifft eine Vorrichtung und ein Verfahren zur Materialverbrauchserfassung an einem Fertigungsarbeitsplatz.

Im Bereich von manuellen Fertigungsprozessen, beispielsweise bei der händischen Montage von bestückten Leiterplatten (Englisch: Printed Circuit Board Assembly, PCBA) in ein Gehäuse, die von einer Person an einem entsprechenden Fertigungsarbeitsplatz durchgeführt wird, sind oftmals Verbrauchsmaterialien, wie beispielsweise Kleb- und Dichtstoffe oder Wattestäbchen zur Reinigung erforderlich. Diese sollten durchgängig in der benötigten Menge am Fertigungsarbeitsplatz zur Verfügung stehen. Für diesen Zweck ist es notwendig, zumindest einen aktuellen Vorrat dieser Verbrauchsmaterialien möglichst genau zu erfassen.

Bisher muss der an einem Fertigungsarbeitsplatz verfügbare Vorrat an Verbrauchsmaterialien von einem Linienmitarbeiter, beispielsweise in regelmäßigen Abständen oder nach Arbeitsanweisung, überprüft werden. Alternativ oder zusätzlich wird auf Basis von Erfahrungswerten ein mittlerer Verbrauch für Materialien, die nicht oder nicht vollständig in Stücklisten erfasst werden können, geschätzt und damit auf den noch vorhandenen Vorrat geschlossen. Für stückhaftes, also abzählbares, Material gibt es eigene Lösungen, wie beispielsweise ein sogenanntes Pick-by-Light-System, bei dem jede Entnahme eines Materials wie einer Schraube aus dem Vorratsbehälter mit Hilfe eines optischen Sensors oder durch Quittierung durch den Linienmitarbeiter erfasst wird. Somit wird jede Änderung des Bestands in Echtzeit ermittelt. Derartige Lösungen sind jedoch nicht auf nicht stückhafte Verbrauchsmaterialien anwendbar.

Sofern der aktuelle Vorrat an Verbrauchsmaterialien nicht mit ausreichender Genauigkeit erfasst werden kann, kann unter Umständen nicht sichergestellt werden, dass der verfügbare Vorrat an Verbrauchsmaterialien noch für den nächsten Arbeitsschritt ausreichend ist, dass also eine ausreichende Rüstung an Verbrauchsmaterialien an dem Fertigungsarbeitsplatz vorhanden ist. Dies führt unter Umständen zu Engpässen und schlimmstenfalls zu einer Unterbrechung des Fertigungsauftrags. Zudem ist es nicht möglich, einen tatsächlichen Verbrauch pro Prozess systemisch zu erfassen, wodurch das Ermitteln eines tatsächlichen Materialverbrauchs pro hergestelltem Gerät in einer Stückliste erschwert wird und unter Umständen sogar die tatsächlichen Produktkosten verfälscht werden.

Folglich besteht eine Aufgabe darin, eine gegenüber den bekannten Methoden verbesserte Erfassung von Verbrauchsmaterial an einem Fertigungsarbeitsplatz zu realisieren. Insbesondere soll es ermöglicht werden, einen Vorrat an nicht stückhaftem Material weitestgehend korrekt zu erfassen.

Diese Aufgabe wird gelöst durch die Gegenstände der unabhängigen Patentansprüche. Weiterbildungen und Ausgestaltungen sind Gegenstände der abhängigen Patentansprüche.

Ein Aspekt der vorliegenden Anmeldung betrifft eine Vorrichtung zur Materialverbrauchserfassung an einem Fertigungsarbeitsplatz, welche eine Kamera und eine mit der Kamera gekoppelte Auswerteeinheit aufweist. Die Kamera ist dazu eingerichtet, einen Vorrat eines an dem Fertigungsarbeitsplatz verwendeten Materials zu erfassen und eine entsprechende Folge von Einzelbildern zu erzeugen. Die Auswerteeinheit ist dazu vorbereitet, die Folge von Einzelbildern auszuwerten, daraus eine vorhandene Menge des Materials zu ermitteln und mit einem Ausgabesignal bereitzustellen.

Mit der vorgeschlagenen Vorrichtung wird der Vorrat oder Füllstand des eingesetzten Verbrauchsmaterials, welches abzählbar oder nicht abzählbar ist und von einer an dem Fertigungsarbeitsplatz arbeitenden Person verwendet wird, optisch erfasst. Dies erfolgt durch die Kamera, welche beispielsweise als handelsübliche Streamingkamera implementiert ist, in Form der Folge von Einzelbildern. Die Auswerteeinheit ermittelt auf Basis dieser Folge von Einzelbildern die aktuell vorhandene Menge des betreffenden Verbrauchsmaterials und stellt dieses Ergebnis mit dem Ausgabesignal zur Verfügung.

Mit Hilfe der vorgeschlagenen Vorrichtung kann der aktuelle Vorrat, also die momentan vorhandene Menge des Materials oder Verbrauchsmaterials, exakt erfasst werden. Mit dieser Kenntnis lässt sich anschließend auch ermitteln, ob ausreichend Rüstmaterial für beispielsweise einen nächsten an dem Fertigungsarbeitsplatz durchzuführenden Prozess verfügbar ist. Aufgrund der optischen Detektion kann dies auch für nicht zählbares Material wie beispielsweise Klebstoff bestimmt werden.

Gemäß einer Weiterbildung weist die Vorrichtung zusätzlich mindestens eine Waage mit einer Anzeige auf. Die Waage ist dazu eingerichtet, ein Gewicht des Materials zu bestimmen und an der Anzeige anzuzeigen. Die Auswerteeinheit umfasst eine Bildverarbeitungskomponente, die dazu eingerichtet ist, ein in der Folge von Einzelbildern an der Anzeige der Waage jeweils angezeigtes Gewicht des Materials zu erkennen und in Form einer Zahl als vorhandene Menge des Materials mit dem Ausgabesignal auszugeben.

Der Vorrat des an dem Fertigungsarbeitsplatz verwendeten Materials wird also dadurch erfasst, dass das Material gewogen wird, sein Gewicht angezeigt wird und diese Anzeige von der Kamera optisch erfasst wird. Die Bildverarbeitungskomponente der Auswerteeinheit erkennt in der Folge von Einzelbildern das angezeigte Gewicht und gibt dieses als Zahl mit dem Ausgabesignal aus. Somit "liest" die erfindungsgemäße Vorrichtung das mit der Waage bestimmte Gewicht des vorhandenen Verbrauchsmaterials ab.

Mit anderen Worten ermöglicht die angegebene Vorrichtung durch Verwendung eines einfachen Wägesystems in Form der definierten Waage, die als elektronische bzw. digitale oder mechanische Waage, eben allgemein als Gewichtsbestimmungsvorrichtung ausgeführt sein kann, in Verbindung mit der definierten Kamera auf einfache Art und Weise ein Erfassen des aktuellen Bestands des Verbrauchsmaterials. Die Anzeige ist realisiert als elektronische Anzeige oder elektronisches Display. Mit Hilfe der Kamera und der Auswerteeinheit bzw. Bildverarbeitungskomponente kann die an der Waage angezeigte Gewichtsangabe des Materials von deren elektronischem Display abgelesen werden.

Alternativ oder zusätzlich zur Gewichtsbestimmung mittels Waage kann durch Vergleich der Abbildung beispielsweise eines Vorratsbehälters in der Folge von Einzelbildern mit entsprechenden Referenzbildern in einer dafür vorbereiteten, d.h. trainierten, weiteren Bildverarbeitungskomponente in der Auswerteeinheit die vorhandene Menge ermittelt werden. Durch Abgleich mit Referenzbildern, die einen mehr oder weniger gefüllten Vorratsbehälter zeigen, lässt sich beispielsweise ein prozentualer Verbrauchsstand ermitteln. Optional kann zusätzlich in einer selbstlernenden Funktion das aktuelle Bild des Vorratsbehälters mit dem ermittelten Verbrauch aus dem Prozess kombiniert bzw. korreliert werden. Mithilfe eines entsprechenden Trainings kann der in der Bildverarbeitungskomponente eingesetzte Algorithmus ertüchtigt werden, aus den aktuellen Bildern und den Trainingsdaten auf die Restlaufzeit mit dem vorhandenen Vorrat zu schließen bzw. zu entscheiden, wann eine Nachbestückung erforderlich wird.

In einer Weiterbildung ist die Waage weder mit der Auswerteeinheit noch mit der Kamera elektronisch verbunden.

Es gibt somit keine direkte elektronische Verbindung von der Waage zur Kamera oder zur Auswerteeinheit. Die Übermittlung des von der Waage bestimmten Gewichts des Materials erfolgt ausschließlich auf optischem Weg mittels der von der Kamera erzeugten Folge von Einzelbildern. Damit ist die Vorrichtung auf besonders einfache Art und Weise an einem bereits bestehenden Fertigungsarbeitsplatz nachrüstbar, weil lediglich mindestens eine Waage zusätzlich vorzusehen ist. Eine aufwendige und umständliche Verkabelung der Waage kann mit Vorteil unterbleiben. Auf diese Art und Weise kann auch der vorhandene Vorrat eines nicht stückigen Materials, beispielsweise Klebstoff oder Lötzinn, über die Bestimmung seines Gewichts auf einfache aber exakte Art und Weise bestimmt werden.

Im Sinne eines sogenannten Greyfield Refits kann ein vorhandener Fertigungsarbeitsplatz durch Anbringen einer einfachen Videokamera und einer einfachen Waage in kostengünstiger Art und Weise so umgestaltet werden, dass der vorhandene Vorrat eines Materials, welches an diesem Fertigungsarbeitsplatz eingesetzt wird, exakt bestimmt und anschließend auch überwacht werden kann.

In einer Weiterbildung umfasst die Bildverarbeitungskomponente eine künstliche Intelligenz zur Objekterkennung. Insbesondere umfasst sie ein faltungsneuronales Netzwerk. Insbesondere umfasst diese künstliche Intelligenz ein YOLO-Netz, You Only Look Once, oder ist als YOLO-Netz realisiert.

Die Bildverarbeitungskomponente, die mittels Mustererkennung aus der bildlichen Darstellung der Anzeige der Waage in der Folge von Einzelbildern das Gewicht des auf der Waage liegenden Materials in die mit dem Ausgabesignal bereitgestellte Zahl umwandelt, wird beispielsweise durch ein Convolutional Neural Network, CNN, realisiert. Hierfür kann ein der Fachwelt bekanntes YOLO-Netz verwendet werden. YOLO wird hier zur Erkennung der angezeigten digitalen Ziffern verwendet. Bekanntermaßen werden dazu die mit der Folge von Einzelbildern bereitgestellten Bilddaten vorverarbeitet, indem beispielsweise die dargestellten Ziffern mit Begrenzungsrahmen, auch bekannt als Bounding Boxes, markiert werden und diese anschließend entsprechenden Klassen, also beispielsweise einer Klasse pro Ziffer, zugewiesen werden. Auf diese Weise werden die dargestellten Ziffern in Echtzeit als Objekte erkannt.

Gemäß einer Weiterbildung wurde die Bildverarbeitungskomponente, insbesondere die KI bzw. das YOLO-Netz, unter Einsatz annotierter Trainingsdaten vorab darauf trainiert, in den jeweiligen Einzelbildern der Folge einen Bildbereich zu ermitteln, der die Waage zeigt, und in dem ermittelten Bildbereich einen Anzeigewert der Waage zu erkennen und in die Zahl umzuwandeln.

Das Training der Bildverarbeitungskomponente erfolgt in fachüblicher Art und Weise vorab, also vor ihrem Einsatz im laufenden Betrieb an dem Fertigungsarbeitsplatz. Dafür werden annotierte Trainingsdaten erzeugt, beispielsweise Einzelbilder, die jeweils mindestens die Waage mit ihrer Anzeige und einer oder mehrerer Ziffern darauf zeigen, und als Annotation die auf dem Bild dargestellte eine oder mehrere Ziffern angeben, verwendet. Im nächsten Schritt sind Trainingsdaten zu erzeugen, die vor dem Hintergrund des Fertigungsarbeitsplatzes die Waage zeigen und entsprechend gelabelt sind. Alternativ kann das Training auch in einem Schritt erfolgen, indem annotierte Trainingsbilder der Waage samt Anzeige vor dem Hintergrund des Fertigungsarbeitsplatzes beispielsweise einem auf die Erkennung digitaler Ziffern vortrainierten YOLO-Netz zugeführt werden. Durch Anwendung der Trainingsdaten wird die Bildverarbeitungskomponente in dem vorab durchgeführten Training dazu ertüchtigt, im laufenden Betrieb den Anzeigewert der Waage zu erkennen und in die Zahl umzuwandeln.

In einer Weiterbildung ist die Auswerteeinheit ferner dazu eingerichtet, die mit dem Ausgabesignal bereitgestellte Menge des Materials mit einer vordefinierten Sollmenge zu vergleichen und ein Warnsignal auszugeben, falls die vorhandene Menge des Materials die Sollmenge unterschreitet.

Die Sollmenge ist dabei beispielsweise eine mindestens erforderliche Menge des Materials, welche für die Durchführung einer gewünschten Anzahl an Prozessen an dem Fertigungsarbeitsplatz erforderlich bzw. ausreichend ist. Mit Hilfe des Warnsignals wird folglich signalisiert, dass nicht mehr genügend Material vorrätig ist, bevor ein zu geringer Vorrat zu einem Engpass in der Fertigung führt. Mit Vorteil kann die Sollmenge so definiert werden, dass das Warnsignal rechtzeitig ausgegeben wird, so dass ein Nachbestellen bzw. Nachrüsten des betroffenen Materials möglich ist, ohne einen zwischenzeitlichen Stopp der Fertigung zu verursachen.

Beispielsweise kann bei stückbehafteten Materialien auf Basis des bekannten Gewichts eines Stücks des Materials durch Umrechnung aus dem aktuell ermittelten Gewicht auf der vorhandene Vorrat in Stück errechnet werden. Die Sollmenge kann in einem solchen Fall in Form einer Sollstückzahl angegeben werden. Sofern die erforderliche Stückzahl pro Prozess bekannt ist, kann durch Kenntnis der Gewichte pro Prozess abgeschätzt werden, ob ein vorhandener Restbestand des Materials für weitere Prozesse ausreichend ist.

Gemäß einer weiteren Ausprägung ist die Auswerteeinheit dazu eingerichtet, eine Differenz zwischen einer zuletzt bestimmten vorhandenen Menge des Materials und einer gerade bestimmten vorhandenen Menge des Materials zu ermitteln und diese Differenz als Verbrauch des Materials mit einem Verbrauchssignal bereitzustellen.

Die Auswerteeinheit ist beispielsweise als Mikroprozessor mit Speicher realisiert. Der Mikroprozessor kann separat oder als Teil der Kamera implementiert ist.

Die Auswerteeinheit ist geeignet, eine Differenz zwischen zwei sukzessive mit dem Ausgabesignal bereitgestellten vorhandenen Mengen des Materials zu berechnen, und dieses Delta als Verbrauch des Materials auszugeben. Somit kann genau ermittelt werden, wieviel von dem Material pro Arbeitsgang oder Prozess an dem Fertigungsarbeitsplatz verbraucht wird. Damit kann auch festgestellt werden, ob oder wie sehr ein jeweiliger Verbrauch zwischen unterschiedlichen an dem Fertigungsarbeitsplatz arbeitenden Personen variiert. Dies bietet die Möglichkeit, eventuelle Fehler in der Handhabung aufzudecken.

In einer Weiterentwicklung ist die Auswerteeinheit dazu eingerichtet, die mit dem Verbrauchssignal bereitgestellte Differenz über mehrere an dem Fertigungsarbeitsplatz von einer Person durchgeführte Prozesse zu mitteln und den gemittelten Wert mit einem Durchschnittsverbrauchssignal bereitzustellen.

Die tatsächlichen Verbräuche können über beliebige Zeiträume gemittelt werden. Während dieser Zeiträume können unterschiedliche Personen an dem Fertigungsarbeitsplatz arbeiten. Auf diese Weise können Minder- oder Überverbräuche an Material ermittelt werden. Produktfehler, die eventuell daraus resultieren, können somit zeitnah ermittelt werden.

Die Mittelung basiert beispielsweise auf der Bildung eines arithmetischen Mittelwerts.

In einer Weiterentwicklung ist die Auswerteeinheit dazu eingerichtet, den mit dem Durchschnittsverbrauchssignal bereitgestellten gemittelten Wert mit einem für das Material vordefinierten Sollverbrauchswert zu vergleichen und ein Fehlersignal auszugeben, falls der gemittelte Wert den Sollverbrauchswert überschreitet oder unterschreitet.

Der Sollverbrauchswert ist dabei bezogen auf das Material und den jeweiligen an dem Fertigungsarbeitsplatz durchgeführten Prozess so vordefiniert, dass bei Verwendung der im Sollverbrauchswert angegebenen Menge des Materials für einen Prozess das in dem Prozess erarbeitete Produkt oder Ergebnis mit der erforderlichen Qualität hergestellt wird.

Gemäß einer Weiterbildung ist die Kamera an dem Fertigungsarbeitsplatz angeordnet oder an einer an dem Fertigungsarbeitsplatz arbeitenden Person befestigt.

Die Kamera ist demgemäß an einer geeigneten Stelle an dem Fertigungsarbeitsplatz angebracht. Alternativ ist sie an der dort arbeitenden Person befestigt, beispielsweise an deren Schulter, oder sie ist als Helmkamera ausgeführt. In jedem Fall ist sichergestellt, dass der Vorrat des verwendeten Materials, insbesondere die Anzeige der Waage, im Erfassungsbereich der Kamera liegt.

In einer Weiterbildung ist die Auswerteeinheit zusätzlich dazu eingerichtet, einen jeweiligen Zeitpunkt zur Bereitstellung der vorhandenen Menge des Materials nach Auswertung der von einer an dem Fertigungsarbeitsplatz arbeitenden Person durchgeführten Bewegungen zu bestimmen.

In dieser Weiterentwicklung wird das Ablesen des Gewichts, also das Bereitstellen der ermittelten vorhandenen Menge des Materials, mit den Bewegungen korreliert bzw. synchronisiert, die an dem Fertigungsarbeitsplatz von einer dort arbeitenden Person durchgeführt werden. Dazu werden diese Bewegungen unter Verwendung der bereits vorhandenen Kamera aufgenommen und unter Einsatz geeigneter Bildverarbeitungsalgorithmen jeweils in Bewegungsgraphen umgewandelt. Durch Vergleich mit für die jeweiligen Bewegungen an dem Fertigungsarbeitsplatz bekannten Referenzbewegungsgraphen kann beispielsweise ein Beginn und/oder ein Ende eines jeweiligen Prozesses ermittelt werden, so dass die Menge des noch vorhandenen Materials zu geeigneten Zeitpunkten, beispielsweise nach Abschluss eines Prozesses, aus dem Ausgabesignal entnommen werden kann.

In einer beispielhaften Implementierung wird in einem Prozess eine Wärmeleitmatte mit Hilfe einer Pinzette auf einem PCBA positioniert. Die Auswerteeinheit erkennt im Bilder-Stream z.B. die Pinzette, die Wärmeleitmatte und das PCBA. Der Prozess gilt als durchgeführt, wenn die Pinzettenspitze zur Wärmeleitmatte geführt wird, d.h. beide an einer Position sind, und zusammen an die erforderliche Position auf dem PCBA geführt werden. Bewegt sich anschließend nur die Pinzette ohne die Wärmeleitmatte zurück, so erkennt die Auswerteeinheit, dass der Prozess abgeschlossen ist und der Restvorrat an Wärmeleitmatten bestimmt werden kann. Der Vorrat bzw. der Verbrauch wird entweder durch Auswertung der Gewichtsangabe auf der Waage oder durch Auswertung des Bildes des Vorratsbehälters für Wärmeleitmatten ermittelt. Aus der Kenntnis der Anzahl derartiger Prozesse lässt sich zudem die Anzahl der verbrauchten Wärmeleitpads bestimmen.

Alternativ wird die Bestimmung der vorhandenen Menge des Materials durch die an dem Fertigungsarbeitsplatz arbeitende Person ausgelöst oder getriggert, beispielsweise über ein geeignetes Bedienelement wie z.B. einen Taster. Bei Einsatz der Waage wird dazu beispielsweise nach Beenden des durchgeführten Prozesses das zu überwachende Material auf die Waage gelegt und die oben beschriebene Materialverbrauchserfassung durch Betätigung des Tasters gestartet. Zusätzlich kann dieser durch Betätigen des Tasters ausgelöste Trigger beim Einlernen des Prozesses durch den Bildverarbeitungsalgorithmus verwendet werden, den Algorithmus darauf zu trainieren, richtig zu erfassen, welche Abbildung einen vollen und welche Abbildung einen leeren Vorratsbehälter zeigt. Auch die Zustände zwischen voll und leer können nach dem Einlernen richtig zugeordnet werden. Nach einigen Durchläufen kann der Algorithmus eigenständig anzeigen, wann es - basierend auf der Historie, d.h. den bereits durchgeführten Prozessen - sinnvoll oder notwendig ist, Material nachzubestellen.

Gemäß einer Weiterentwicklung umfasst die Vorrichtung eine weitere Waage mit einer weiteren Anzeige. Die weitere Waage ist dazu eingerichtet, ein Gewicht eines weiteren an dem Fertigungsarbeitsplatz verwendeten Materials zu bestimmen und an der weiteren Anzeige anzuzeigen. Die Kamera ist des Weiteren dazu eingerichtet, einen Vorrat des weiteren Materials zu erfassen und die Folge von Einzelbildern entsprechend zu erzeugen. Alternativ umfasst die Vorrichtung eine weitere Kamera, die dazu eingerichtet ist, den Vorrat des weiteren Materials zu erfassen und eine weitere Folge von Einzelbildern entsprechend zu erzeugen. Die Bildverarbeitungskomponente der Auswerteeinheit ist weiter dazu eingerichtet, in der Folge von Einzelbildern der Kamera oder in der weiteren Folge von Einzelbildern der weiteren Kamera ein an der weiteren Anzeige der weiteren Waage jeweils angezeigtes Gewicht des weiteren Materials zu erkennen und in Form einer weiteren Zahl als vorhandene Menge des weiteren Materials mit dem Ausgabesignal auszugeben.

Sind an dem Fertigungsarbeitsplatz zwei oder mehr unterschiedliche Materialien zu erfassen bzw. zu überwachen, so können hierfür jeweils separate Waagen und/oder Kameras vorgesehen werden. Beispielsweise kann für jedes der eingesetzten Materialien jeweils eine separate Waage und eine zugehörige Kamera, beispielsweise eine Low-Cost-Videokamera, vorgesehen sein, um den aktuellen Vorrat des betreffenden Materials in der oben beschriebenen Art und Weise zu bestimmen. Alternativ kann unter Zuhilfenahme genau einer Kamera der gesamte Fertigungsarbeitsplatz beobachtet werden, wobei an diesem eine oder mehrere Waagen zur Bestimmung der Gewichte der unterschiedlichen eingesetzten Materialien vorgesehen sein können. Die Waagen können beispielsweise auch an einem Ruheort des jeweiligen Materials an dem Fertigungsarbeitsplatz aufgestellt sein, so dass das Gewicht nach jeder Verwendung des Materials bestimmt wird. Wie bereits oben ausgeführt, ist es mit der angegebenen Vorrichtung möglich, auch nicht zählbare Materialien zu überwachen, indem der Vorrat des jeweiligen Materials optisch erfasst wird. Dabei hat keine der Waagen eine direkte elektronische Verbindung zu der Kamera bzw. den Kameras oder der Auswerteeinheit.

Ein weiterer Aspekt der vorliegenden Erfindung betrifft ein Verfahren zur Materialverbrauchserfassung an einem Fertigungsarbeitsplatz, welches die folgenden Schritte aufweist:
- optisches Erfassen eines Vorrats eines an dem Fertigungsarbeitsplatz verwendeten Materials und Erzeugen einer entsprechenden Folge von Einzelbildern,
- Auswerten der Folge von Einzelbildern und daraus Ermittlung einer vorhandenen Menge des Materials, und
- Bereitstellen eines Ausgabesignals mit der ermittelten Menge.

Mit dem erfindungsgemäßen Verfahren wird der Vorrat bzw. die vorhandene Menge des Materials optisch erfasst und aus einem Bildstrom ermittelt. Dies ermöglicht eine kostengünstige und gleichzeitig exakte Ermittlung des noch vorhandenen Vorrats.

Das erfindungsgemäße Verfahren kann auch als computerimplementiertes Verfahren bezeichnet werden. Es wird beispielsweise in Software realisiert, die auf einem Mikroprozessor ausgeführt wird. In einer Realisierungsmöglichkeit wird das Verfahren von der erfindungsgemäßen Anordnung implementiert. Insbesondere ist die erfindungsgemäße Anordnung zur Ausführung des beschriebenen erfindungsgemäßen Verfahrens eingerichtet.

Im Übrigen gelten für das Verfahren die Ausführungen zu der erfindungsgemäßen Vorrichtung entsprechend, dies betrifft insbesondere Vorteile und Ausführungsformen. Die genannten Ausführungsformen können untereinander kombiniert werden, sofern sich nicht explizit etwas anderes ergibt oder erwähnt ist.

Das optische Erfassen des Vorrats kann wie oben beschrieben unter Einsatz mindestens einer Waage, die das Gewicht des Materials bestimmt und anzeigt, und Erkennen des angezeigten Gewichts und Umwandeln in eine verarbeitbare Zahl erfolgen. Alternativ kann durch Vergleich mit entsprechenden Referenzbildern eine des Materials bestimmt werden.

Gemäß einer Weiterbildung weist das Verfahren zusätzlich folgende Schritte auf:
- Ermitteln einer Differenz zwischen einer zuletzt bestimmten vorhandenen Menge des Materials und einer gerade bestimmten vorhandenen Menge des Materials, und
- Bereitstellen der Differenz als Verbrauch des Materials mit einem Verbrauchssignal.

Beispielsweise kann über eine Gewichtsabnahme eines Verbrauchsmaterials aus der mit dem Verbrauchssignal bereitgestellten Differenz stückzahlgenau der tatsächliche Verbrauch bestimmt werden.

In einer Weiterentwicklung umfasst das Verfahren noch folgende Schritte:
- optisches Erfassen mindestens einer Bewegung, die von einer an dem Fertigungsarbeitsplatz arbeitenden Person durchgeführt wird, und
- Auswerten der Bewegung und dadurch Bestimmen eines Zeitpunkts zur Bereitstellung der ermittelten Menge des Materials.

Wie bereits oben beschrieben wird das optische Erfassen von einer an dem Fertigungsarbeitsplatz angeordneten Kamera durchgeführt. Diese Kamera wird wiederverwendet, um die Bewegung oder Bewegungen einer arbeitenden Person zu erfassen, welche anschließend ausgewertet werden, um einen Zeitpunkt zu bestimmen, zu dem die ermittelte Menge des Materials mit dem Ausgabesignal bereitgestellt wird. Dadurch wird die Bereitstellung der ermittelten Menge mit beispielsweise einem Bewegungsende, oder mit einem Prozessende synchronisiert.

Nachfolgend wird die Erfindung rein beispielhaft unter Bezugnahme auf die Zeichnungen beschrieben. Funktions- bzw. wirkungsgleiche Zeichnungselemente tragen gleiche Bezugszeichen. Es zeigen:
- Fig. 1: eine schematische Darstellung eines beispielhaften Fertigungsarbeitsplatzes mit der erfindungsgemäßen Vorrichtung, und
- Fig. 2: ein Anwendungsbeispiel für das erfindungsgemäße Verfahren beziehungsweise die erfindungsgemäße Vorrichtung.

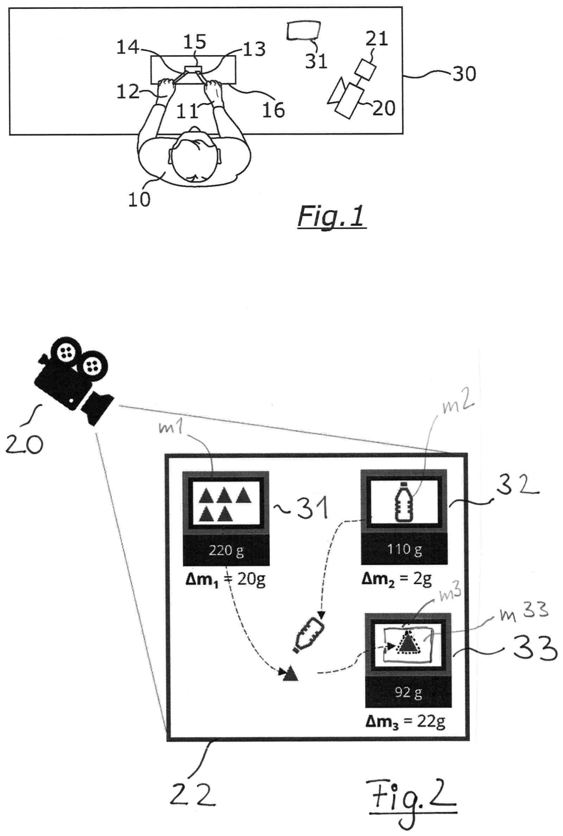

Fig. 1 zeigt eine schematische Darstellung eines beispielhaften Fertigungsarbeitsplatzes mit der erfindungsgemäßen Vorrichtung. An dem Fertigungsarbeitsplatz 30 wird das erfindungsgemäße Verfahren eingesetzt. Eine Person, hier ein Werker 10, arbeitet an dem beispielhaften Fertigungsarbeitsplatz 30 unter Einsatz seiner rechten Hand 11 und seiner linken Hand 12. Beispielsweise wird mit der rechten Hand 11 eine Kartusche 13 mit Klebstoff geführt. Mit der linken Hand 12 wird eine Pinzette 14 gehalten und mit dieser ein Bauteil 15 gegriffen. Dieses soll mit dem Werkstück 16 verklebt werden. Ferner ist an dem Fertigungsarbeitsplatz eine Waage 31 vorgesehen. Eine feststehende Kamera 20 ist an dem Fertigungsarbeitsplatz 30 so montiert, dass sie die Anzeige der Waage 31 optisch erfassen kann. Optional kann die Kamera 20 zusätzlich die Bewegungen des Werkers 10 optisch erfassen. Die Auswertung der von der Kamera erzeugten Folge von Einzelbildern mit der Anzeige der Waage 31 erfolgt in einer mit der Kamera 20 verbundenen Auswerteinheit 21.

Die Waage 31 befindet sich in der beispielhaften Darstellung an der Ruheposition für die Klebstoff-Kartusche 13. Somit zeigt die Waage 31 das Gewicht der Klebstoff-Kartusche 13, bevor der Werker 10 mit dem Klebeprozess beginnt und nach Abschluss des Klebeprozesses, wenn der Werker 10 die Kartusche 13 wieder in die Ruheposition zurückgelegt hat.

Zur Bestimmung der tatsächlichen Menge des noch vorhandenen Klebstoffs wird in diesem Beispiel in der Auswerteeinheit 21 jeweils von der mit dem Ausgabesignal bereitgestellten Zahl das bekannte Leergewicht der Kartusche abgezogen.

Fig. 2 zeigt ein Anwendungsbeispiel für das erfindungsgemäße Verfahren beziehungsweise die erfindungsgemäße Vorrichtung. Zu sehen ist ein Ausschnitt eines Fertigungsarbeitsplatzes mit einer Kamera 20, in deren Sichtbereich 22, auch als Field of View bezeichnet, drei Waagen 31, 32 und 33 zu sehen sind. Auf der ersten Waage 31 befindet sich ein Behälter m1, der mehrere Stücke einer ersten Komponente enthält. Die erste Waage 31 zeigt ein Gewicht von 220 Gramm. Auf der zweiten Waage 32 befindet sich eine zweite Komponente, beispielsweise wie hier dargestellt eine Flasche m2 mit Klebstoff. Auf der dritten Waage 33 befindet sich das fertige Produkt m3, bei dem ein Stück der ersten Komponente aus dem Behälter m1 mithilfe des Klebers aus der Flasche m2 auf das Werkstück m33 geklebt wurde.

Die Kamera 20 erfasst das Gewicht des Behälters m1, welches auf der Anzeige der ersten Waage 31 mit 220 Gramm angegeben wird. Ferner erfasst die Kamera 20 das Gewicht der Klebstoffflasche m2, welches an der Anzeige der zweiten Waage 32 mit 110 Gramm angegeben wird. Die dritte Waage 33 zeigt das Gewicht des Endprodukts m3 mit 92 Gramm an, was ebenfalls von der Kamera 20 erfasst wird. In der beispielhaften dargestellten Situation hat also ein Werker bereits wie durch die gestrichelten Pfeile angedeutet ein Stück der ersten Komponente m1 mithilfe des Klebers m2 auf das Werkstück m33 appliziert und so das fertige Produkt m3 erzeugt. Mithilfe der erfindungsgemäßen Vorrichtung beziehungsweise des Verfahrens ist es vorteilhafterweise möglich, für jede der Komponenten m1 und m2, sowie für das fertige Produkt m3 jeweils unter Verwendung des entsprechenden Ausgabesignals und der weiteren Auswertung desselben die Gewichtsabnahme beziehungsweise Gewichtszunahme zu bestimmen. Im dargestellten Beispiel hat der Behälter m1 mit der ersten Komponente 20 Gramm an Gewicht verloren, die zweite Komponente m2 hat durch den ausgeführten Prozess 2 Gramm an Gewicht verloren, während das Endprodukt m3 22 Gramm an Gewicht zugenommen hat. Es kann also bezogen auf das Endprodukt m3 stückzahlgenau der tatsächliche Verbrauch der dafür notwendigen Komponenten m1 und m2 bestimmt werden. In der Folge kann die Wiederbeschaffung der Komponenten besser geplant werden.

Keine der gezeigten Waagen 31, 32 und 33 ist über Kabel mit der Kamera 20 oder der Auswerteeinheit verbunden. Dadurch lässt sich die erfindungsgemäße Vorrichtung kostengünstig in einem bestehenden Fertigungsarbeitsplatz nachrüsten im Sinne eines "Greyfield Refits".

### Bezugszeichenliste

- 10: Werker
- 11, 12: Hand
- 13: Kartusche
- 14: Pinzette
- 15: Bauelement
- 16, m33: Werkstück
- 20: Kamera
- 21: Auswerteeinheit
- 22: Sichtfeld
- 30: Fertigungsarbeitsplatz
- 31, 32, 33: Waage
- m1, m2: Komponente
- m3: Endprodukt

## Patentansprüche

1. Vorrichtung zur Materialverbrauchserfassung an einem Fertigungsarbeitsplatz (30) aufweisend
eine Kamera (20), die dazu eingerichtet ist, einen Vorrat eines an dem Fertigungsarbeitsplatz (30) verwendeten Materials (m1, m2) zu erfassen und eine entsprechende Folge von Einzelbildern zu erzeugen,
eine mit der Kamera (20) gekoppelte Auswerteeinheit (21), die dazu eingerichtet ist, die Folge von Einzelbildern auszuwerten, daraus eine vorhandene Menge des Materials (m1, m2) zu ermitteln und mit einem Ausgabesignal bereitzustellen.

2. Vorrichtung nach Anspruch 1,
weiter aufweisend mindestens eine Waage (31), wobei die Waage eine Anzeige umfasst und dazu eingerichtet ist, ein Gewicht des Materials (m1, m2) zu bestimmen und an der Anzeige anzuzeigen,
wobei die Auswerteeinheit (21) eine Bildverarbeitungskomponente umfasst, die dazu eingerichtet ist, ein in der Folge von Einzelbildern an der Anzeige der Waage (31) jeweils angezeigtes Gewicht des Materials (m1, m2) zu erkennen und in Form einer Zahl als vorhandene Menge des Materials (m1, m2) auszugeben.

3. Vorrichtung nach dem vorstehenden Anspruch,
wobei die Waage (31) weder mit der Auswerteeinheit (21) noch mit der Kamera (20) elektronisch verbunden ist.

4. Vorrichtung nach Anspruch 2 oder 3,
wobei die Bildverarbeitungskomponente eine Künstliche Intelligenz zur Objekterkennung, insbesondere ein faltungsneuronales Netzwerk, insbesondere ein YOLO-Netz, umfasst.

5. Vorrichtung nach dem vorstehenden Anspruch,
wobei die Bildverarbeitungskomponente unter Einsatz annotierter Trainingsdaten vorab darauf trainiert wurde, in den jeweiligen Einzelbildern der Folge einen Bildbereich zu ermitteln, der die Waage (31) zeigt, und in dem ermittelten Bildbereich einen Anzeigewert der Waage (31) zu erkennen und in die Zahl umzuwandeln.

6. Vorrichtung nach einem der vorstehenden Ansprüche,
wobei die Auswerteeinheit (21) weiter dazu eingerichtet ist, die mit dem Ausgabesignal bereitgestellte vorhandene Menge des Materials (m1, m2) mit einer vordefinierten Sollmenge zu vergleichen und ein Warnsignal auszugeben, falls die vorhandene Menge des Materials (m1, m2) die Sollmenge unterschreitet.

7. Vorrichtung nach einem der vorstehenden Ansprüche,
wobei die Auswerteeinheit (21) weiter dazu eingerichtet ist, eine Differenz zwischen einer zuletzt bestimmten vorhandenen Menge des Materials (m1, m2) und einer gerade bestimmten vorhandenen Menge des Materials (m1, m2) zu ermitteln und die Differenz als Verbrauch des Materials (m1, m2) mit einem Verbrauchssignal bereitzustellen.

8. Vorrichtung nach dem vorstehenden Anspruch,
wobei die Auswerteeinheit (21) weiter dazu eingerichtet ist, die mit dem Verbrauchssignal bereitgestellte Differenz über mehrere an dem Fertigungsarbeitsplatz (30) von einer Person (10) durchgeführte Prozesse zu mitteln und den gemittelten Wert mit einem Durchschnittsverbrauchssignal bereitzustellen.

9. Vorrichtung nach dem vorstehenden Anspruch,
wobei die Auswerteeinheit (21) weiter dazu eingerichtet ist, den mit dem Durchschnittsverbrauchssignal bereitgestellten gemittelten Wert mit einem für das Material (m1, m2) vordefinierten Sollverbrauchswert zu vergleichen und ein Fehlersignal auszugeben, falls der gemittelte Wert den Sollverbrauchswert überschreitet oder unterschreitet.

10. Vorrichtung nach einem der vorstehenden Ansprüche,
wobei die Kamera (20) an dem Fertigungsarbeitsplatz (30) angeordnet ist oder an einer an dem Fertigungsarbeitsplatz (30) arbeitenden Person (10) befestigt ist.

11. Vorrichtung nach einem der vorstehenden Ansprüche,
wobei die Auswerteeinheit (21) weiter dazu eingerichtet ist, einen jeweiligen Zeitpunkt zur Bereitstellung der vorhandenen Menge des Materials (m1, m2) nach Auswertung der von einer an dem Fertigungsplatz (30) arbeitenden Person durchgeführten Bewegungen zu bestimmen.

12. Vorrichtung nach einem der Ansprüche 2 bis 11,
weiter aufweisend eine weitere Waage (32, 33), wobei die weitere Waage (32, 33) eine weitere Anzeige umfasst und dazu eingerichtet ist, ein Gewicht eines weiteren an dem Fertigungsarbeitsplatz (30) verwendeten Materials (m1, m2) zu bestimmen und an der weiteren Anzeige anzuzeigen, wobei die Kamera (20) weiter dazu eingerichtet ist, einen Vorrat des weiteren Materials (m1, m2) zu erfassen und die Folge von Einzelbildern entsprechend zu erzeugen, oder wobei die Vorrichtung eine weitere Kamera (20) umfasst, welche dazu eingerichtet ist, den Vorrat des weiteren Materials (m1, m2) zu erfassen und eine weitere Folge von Einzelbildern entsprechend zu erzeugen,
wobei die Bildverarbeitungskomponente der Auswerteeinheit (21) weiter dazu eingerichtet ist, in der Folge von Einzelbildern der Kamera (20) oder in der weiteren Folge von Einzelbildern der weiteren Kamera (20) ein an der weiteren Anzeige der weiteren Waage (32, 33) jeweils angezeigtes Gewicht des weiteren Materials (m1, m2) zu erkennen und in Form einer weiteren Zahl als vorhandene Menge des weiteren Materials (m1, m2) mit dem Ausgabesignal auszugeben.

13. Verfahren zur Materialverbrauchserfassung an einem Fertigungsarbeitsplatz (30) aufweisend folgende Schritte:
optisches Erfassen eines Vorrats eines an dem Fertigungsarbeitsplatz (30) verwendeten Materials (m1, m2) und Erzeugung einer entsprechenden Folge von Einzelbildern,
Auswerten der Folge von Einzelbildern und daraus Ermittlung einer vorhandenen Menge des Materials (m1, m2), und
Bereitstellen eines Ausgabesignals mit der ermittelten Menge.

14. Verfahren nach dem vorstehenden Anspruch weiter aufweisend:
Ermitteln einer Differenz zwischen einer zuletzt bestimmten vorhandenen Menge des Materials (m1, m2) und einer gerade bestimmten vorhandenen Menge des Materials (m1, m2), und
Bereitstellen der Differenz als Verbrauch des Materials (m1, m2) mit einem Verbrauchssignal.

15. Verfahren nach Anspruch 13 oder 14 weiter aufweisend
optisches Erfassen mindestens einer Bewegung, die von einer an dem Fertigungsplatz (30) arbeitenden Person durchgeführt wird, und
Auswerten der Bewegung und dadurch Bestimmen eines Zeitpunkts zur Bereitstellung der ermittelten Menge des Materials (m1, m2).
